# EUROPEAN PATENT APPLICATION

(11) **EP 4 644 111 A1**
(43) Date of publication of application: **05.11.2025**
(21) Application number: 25173377.0
(22) Date of filing: 29.04.2025
(51) Int. Cl.: B32B 5/02, H01M 10/658, H01M 50/231, H01M 50/293

(54) **HEAT INSULATION SHEET FOR RECHARGEABLE LITHIUM BATTERY AND RECHARGEABLE LITHIUM BATTERY MODULE INCLUDING THE SAME**

(30) Priority: 30.04.2024 KR 20240057494
(71) Applicant: SAMSUNG SDI CO., LTD., Yongin-si, Gyeonggi-do 17084 (KR)
(72) Inventor: PARK, Hye Jin, 16678 Suwon-si, Gyeonggi-do (KR); YU, A Rum, 16678 Suwon-si, Gyeonggi-do (KR); WOO, Myung Heui, 16678 Suwon-si, Gyeonggi-do (KR); YANG, Seung Yong, 16678 Suwon-si, Gyeonggi-do (KR); LEE, Jung Hyo, 16678 Suwon-si, Gyeonggi-do (KR); LEE, Jae Hyun, 16678 Suwon-si, Gyeonggi-do (KR); RA, Ha Na, 16678 Suwon-si, Gyeonggi-do (KR); YANG, Yun Sung, 16678 Suwon-si, Gyeonggi-do (KR)
(74) Representative: Gulde & Partner

(57) **Abstract**

The present disclosure relates to a heat insulation sheet for a rechargeable lithium battery, and a rechargeable lithium battery module. The heat insulation sheet for a rechargeable lithium battery includes a first base layer, a first aerogel-containing layer, a second aerogel-containing layer, and a third aerogel-containing layer that are stacked together. The first aerogel-containing layer and the third aerogel-containing layer each include a fibrous support, an aerogel, and a binder, and the second aerogel-containing layer includes an aerogel and a binder.

## Description

### BACKGROUND

### 1. Field of the disclosure

The present disclosure relates to a heat insulation sheet for a rechargeable lithium battery, and a rechargeable lithium battery module including the heat insulation sheet.

### 2. Discussion of Related Art

With increasing presence of electronic devices using batteries, such as, e.g., mobile phones, notebook computers, electric vehicles, and the like, the demand for secondary batteries having high energy density and high capacity is increasing. Therefore, improving the performance of rechargeable lithium batteries maybe advantageous.

A rechargeable lithium battery typically includes a positive electrode and a negative electrode that include an active material capable of the intercalation and deintercalation of lithium ions, and produces electric energy by oxidation and reduction reactions when the lithium ions are intercalated into and deintercalated from the positive electrode and the negative electrode.

A plurality of rechargeable lithium batteries may be included to form a rechargeable lithium battery module. In the rechargeable lithium battery module, hindering or blocking heat propagation and/or heat transfer between adjacent cells in the event of thermal runaway and/or ignition may be advantageous.

### SUMMARY

One aspect of the disclosure concerns a heat insulation sheet for a rechargeable lithium battery with desired or improved heat insulation and compression properties.

Another aspect of the disclosure concerns a rechargeable lithium battery module including the heat insulation sheet for a rechargeable lithium battery.

According to one aspect, a heat insulation sheet for a rechargeable lithium battery includes a first base layer, a first aerogel-containing layer, a second aerogel-containing layer, and a third aerogel-containing layer that are stacked, e.g., sequentially stacked. The first aerogel-containing layer and/or the third aerogel-containing layer each include a fibrous support, an aerogel, and a binder. The second aerogel-containing layer includes an aerogel and a binder.

According to another example embodiment, a rechargeable lithium battery module includes a plurality of battery cells that face each other, and the heat insulation sheet for a rechargeable lithium battery between the plurality of battery cells.

Hence, the heat insulation sheet is not only capable of preventing heat from propagating from one battery cell to an adjacent battery cell, but also absorbs pressure of the adjacent cell during a cell degradation and expansion process by providing a high compression rate, thereby increasing the stability of a battery.

In the following, exemplary embodiments of the heat insulation sheet and their potential advantages are discussed. The exemplary embodiments can be combined as desired.

Further, example embodiments of the present disclosure are described in detail below, which may be combined as desired. However, the embodiments are presented as examples, the present disclosure is not limited thereto, and the present disclosure is only defined by the scope of the appended claims.

Unless otherwise stated herein, when a part such as a layer, a membrane, an area, a plate, and the like, is described as being disposed "on" another part, it includes not only a case where the part is "directly on" another part, but also a case where there are other parts therebetween.

Unless otherwise stated herein, the singular may also include the plural. In addition, unless otherwise stated, "A or B" may indicate "including A, including B, or including A and B."

In the present specification, "a combination thereof" may indicate a mixture, stack, composite, copolymer, alloy, blend, and reaction product of constituents.

When the terms "about" or "substantially" are used in this specification in connection with a numerical value, it is intended that the associated numerical value may include a tolerance of ±10% around the stated numerical value. When ranges are specified, the range may include all values therebetween, for example in increments of 0.1%.

According to an embodiment a second base layer is further stacked on the third aerogel-containing layer. This embodiment may have the advantage that the heat insulation sheet is less prone to taking up contamination like dust or moisture, such that the heat insulation sheet is easier to handle and/or has an improved durability.

According to an embodiment, a content of the fibrous support in the second aerogel-containing layer is about 0 wt%. For example, the second aerogel-containing layer may essentially be free from fibrous support material. The second aerogel-containing layer may even consist of the aerogel and the second binder. This embodiment may have the advantage that the second aerogel-containing layer may be more flexible, further improving the absorption of swelling or movement of a battery cell.

According to an embodiment, the first aerogel-containing layer comprises a noncontinuous layer independent of the first base layer. Thus, the first aerogel-containing layer may be provided separate from the first base layer. This embodiment may have the advantage that the first aerogel-containing layer can be formed separate from the first base layer, thereby facilitating production of the two layers, and/or, due to the lack of continuity of the first aerogel-containing layer and the first base layer, thermal isolation may be further improved.

According to an embodiment, the third aerogel-containing layer comprises a noncontinuous layer independent of the second base layer. Thus, the third aerogel-containing layer may be provided separate from the second base layer. This embodiment may have the advantage that the third aerogel-containing layer can be formed separate from the second base layer, thereby facilitating production of the two layers, and/or, due to the lack of continuity of the third aerogel-containing layer and the second base layer, thermal isolation may be further improved.

According to an embodiment, at least one of the first binder and the second binder comprises one or more of polyvinyl alcohol, polyethylene glycol, polyacrylamide, polyvinylpyrrolidone, polyurethane, and polyester. This embodiment may have the advantage that the binder material can be chosen in a flexible manner, allowing consideration of productions and material requirements.

According to an embodiment, at least one of the fibrous supports of the first aerogel-containing layer and the third aerogel-containing layer each comprises glass wool. This embodiment may have the advantage that glass wool is highly temperature insulating, cheap as well as thermally and chemically stable.

According to an embodiment, at least one of the first aerogel-containing layer and the third aerogel-containing layer comprises the fibrous support in an amount ranging from about 5 wt% to about 80 wt%, the aerogel in an amount ranging from about 10 wt% to about 90 wt%, and the first binder in an amount ranging from about 0.3 wt% to about 25 wt%.

For example, the fibrous support may be included in an amount of at least 5 wt% and/or up to 10 wt%, up to 15 wt%, up to 25 wt%, up to 30 wt%, up to 35 wt%, up to 40 wt%, up to 45 wt%, up to 50 wt%, up to 55 wt%, up to 60 wt%, up to 65 wt%, up to 70 wt%, up to 75 wt% or up to 80 wt% of the first aerogel-containing layer and/or the third aerogel-containing layer. The amount of the fibrous support in the first aerogel-containing layer may be the same as in the third aerogel-containing layer or may differ from the amount of the fibrous support in the third aerogel-containing layer.

For example, the aerogel may be included in an amount of at least 10 wt% and/or up to 15 wt%, up to 20 wt%, up to 25 wt%, up to 30 wt%, up to 35 wt%, up to 40 wt%, up to 45 wt%, up to 50 wt%, up to 55 wt%, up to 60 wt%, up to 65 wt%, up to 70 wt%, up to 75 wt%, up to 80 wt%, up to 85 wt%, or up to 90 wt%. The amount of the aerogel in the first aerogel-containing layer may be the same as in the third aerogel-containing layer or may differ from the amount of the aerogel in the third aerogel-containing layer.

For example, the first binder may be included in an amount of at least 0.3 wt% and/or up to 1 wt%, up to 2 wt%, up to 5 wt%, up to 7 wt%, up to 10 wt%, up to 12 wt%, up to 15 wt%, up to 17 wt%, up to 20 wt%, up to 22 wt% or up to 25 wt%. The amount of the first binder in the first aerogel-containing layer may be the same as in the third aerogel-containing layer or may differ from the amount of the first binder in the third aerogel-containing layer.

This embodiment may have the advantage that the first and third aerogel-containing layers can be adapted to the expected thermal insulation and/or mechanical isolation to be required.

According to an embodiment, the second aerogel-containing layer comprises the aerogel in an amount ranging from about 50 wt% to about 99 wt%, and the second binder in an amount ranging from about 1 wt% to about 50 wt%.

For example, the aerogel may be included in an amount of at least 50 wt% and/or up to 60 wt%, up to 70 wt%, up to 80 wt%, up to 90 wt%, up to 95 wt% or up to 99 wt%. The amount of the aerogel in the second aerogel-containing layer may be the same as in the second aerogel-containing layer and/or the third aerogel-containing layer or may differ from the amount of the aerogel in the second aerogel-containing layer and/or the third aerogel-containing layer.

For example, the second binder may be included in an amount of at least 1 wt% and/or up to 2 wt%, up to 5 wt%, up to 7 wt%, up to 10 wt%, up to 12 wt%, up to 15 wt%, up to 17 wt%, up to 20 wt%, up to 25 wt%, up to 30 wt%, up to 35 wt%, up to 40 wt%, up to 45 wt% or up to 50 wt%. The amount of the second binder in the second aerogel-containing layer may be the same as in the second aerogel-containing layer and/or the third aerogel-containing layer or may differ from the amount of the first binder in the second aerogel-containing layer and/or the third aerogel-containing layer.

This embodiment may have the advantage that the second aerogel-containing layer can be adapted to the expected thermal insulation and/or mechanical isolation to be required.

According to an embodiment, the first base layer comprises a mica sheet. This embodiment may have the advantage that mica can improve the heat insulation properties and durability of the heat insulation sheet.

According to an embodiment, the second base layer comprises a mica sheet. This embodiment may have the advantage that mica can improve the heat insulation properties and durability of the heat insulation sheet.

Hence, in summary, the heat insulation sheet may exhibit desired or improved compression properties and desired or improved heat insulation properties by including a stack of the first aerogel-containing layer, the second aerogel-containing layer, and the third aerogel-containing layer that are stacked together, e.g., stacked in the above order.

Herein, "desired or improved compression properties" may indicate, for example, that a compression rate of the heat insulation sheet measured in an experimental example below is about 20 % or more, for example, 25% or more, 50% or more, or ranges from 50 % to 70%. The desired or improved compression properties can increase the stability of the battery by absorbing the pressure of an adjacent cell during a cell deterioration and expansion process.

Hereinafter, the heat insulation sheet according to one example embodiment is described in detail.

### First base layer

The first base layer may support the first aerogel-containing layer, the second aerogel-containing layer, and the third aerogel-containing layer of the heat insulation sheet.

The first base layer may be or include at least one of a film, a thin film, or a sheet formed of or including at least one of a resin, a metal-based inorganic material, inorganic materials other than the metal-based material, or a composite thereof.

The resin may include, for example, one or more of polyolefin-based resins such as polyethylene or polypropylene; polystyrene-based resins; polyester-based resins such as polyethylene terephthalate or polybutylene terephthalate; polyamide-based resins; and polyimide-based resins.

The metal-based inorganic material may include, for example, one or more of copper, nickel, cobalt, iron, chromium, vanadium, palladium, ruthenium, rhodium, molybdenum, tungsten, iridium, silver, gold, and platinum. The metal-based inorganic material may undergo anti-corrosion treatment, insulation treatment, and the like, as needed or desired.

Inorganic materials other than the metal-based material may include one or more of calcium carbonate, talc, and mica.

According to one example embodiment, the heat insulation sheet may include inorganic materials other than the metal-based material as the first base layer, and for example, the first base layer may include a mica sheet. Mica can improve the heat insulation properties and durability of the heat insulation sheet.

The first base layer may have a thickness ranging from 0.01 mm to 5.0 mm, for example, from 0.1 mm to 3 mm, from 0.1 mm to 1 mm, or from 0.3 mm to 1 mm. For example, the thickness may be at least 0.01 mm and/or up to 0.02 mm, up to 0.05 mm, up to 0.1 mm, up to 0.15 mm, up to 0.25 mm, up to 0.5 mm, up to 0.75 mm, up to 1 mm, up to 1.25 mm, up to 1.5 mm, up to 1.75 mm, up to 2 mm, up to 2.25 mm, up to 2.5 mm, up to 2.75 mm, up to 3 mm, up to 3.25 mm, up to 3.5 mm, up to 3.75 mm, up to 4 mm, up to 4.25 mm, up to 4.5 mm, up to 4.75 mm or up to 5 mm. Within the above range, the first base layer may be included in the heat insulation sheet.

### Stack of first aerogel-containing layer, second aerogel-containing layer, and third aerogel-containing layer

The heat insulation sheet may exhibit desired or improved compression properties and heat insulation by including the stack stacked on the first base layer. For example, when a plurality of aerogel-containing layers is stacked on the first base layer, the first aerogel-containing layer, the second aerogel-containing layer, and the third aerogel-containing layer may be stacked, e.g., sequentially stacked, on the first base layer. The first aerogel-containing layer and the third aerogel-containing layer including a fibrous support, an aerogel, and a binder, may be included at the outermost portions of the stack. The second aerogel-containing layer including an aerogel and a binder without the fibrous support may be included in a core of the stack. As a result, the heat insulation and compression properties of the heat insulation sheet can be improved.

According to one example embodiment, the stack may be or include a three-layer stack of the first aerogel-containing layer, the second aerogel-containing layer, and the third aerogel-containing layer. No further aerogel-containing layer may be added to the three-layer stack.

According to one example embodiment, the fibrous support of the stack may be included in an amount ranging from about 10 wt% to about 80 wt%, for example, from about 20 wt% to about 70 wt%. Within the above range, it is possible to readily improve compression properties and heat insulation properties. Herein, the content of the "fibrous support" is a total content of the fibrous support included in the first aerogel-containing layer, the second aerogel-containing layer, and the third aerogel-containing layer. The fibrous support may be a fibrous support material.

### First aerogel-containing layer

The first aerogel-containing layer may be or include a separate layer that is independent of the first base layer. Herein, "separate layer that is independent of" indicates that the first aerogel-containing layer is not formed through impregnation, and the like, in the first base layer, but that the first base layer and the first aerogel-containing layer are formed as layers that are substantially completely separated and noncontinuous.

The first aerogel-containing layer includes a fibrous support, an aerogel, and a binder.

The fibrous support may help support the first aerogel-containing layer and improve the compression properties of the heat insulation sheet.

The fibrous support may be or include a wool mat or a chopped strand mat.

Fibers constituting the fibrous support may include fibrous support material, e.g. one or more of natural fibers, glass fibers, carbon fibers, graphite fibers, mineral fibers, and polymer fibers. For example, the compression properties of the fibrous support can be further improved by using glass fibers.

The natural fiber may be a fiber material derived from a plant or may include a fiber made of a plant including one or more of e.g. hemp, jute, flax, coir, kenaf, and cellulose. The mineral fiber may be or include a fiber made of a mineral including one or more of e.g. basalt, wollastonite, alumina, silica, slag, and rock. The polymer fiber may be or include a fiber made of polymer including one or more of e.g. nylons, polyimides; polyamides, polybenzimidazoles, polybenzoxazoles, polyamide-imides, polyesters such as polyethylene terephthalate and polybutylene terephthalate, and polyolefins such as polyethylene and polypropylene.

For example, the fibrous support may be or includes glass wool.

The fibers in the fibrous support may have an aspect ratio ranging from about 1 to about 5000, for example, from 300 to 5000 or from 2.5 to 2500. For example, the aspect ratio may be at least 1 and/or up to 2, up to 2.5, up to 5, up to 10, up to 25, up to 50, up to 100, up to 250, up to 500, up to 1000, up to 1500, up to 2000, up to 2500, up to 3000, up to 3500, up to 4000, up to 4500 or up to 5000. Within the above range, the aerogel-containing layer can be firmly formed, and the durability of the heat insulation sheet can be improved. Herein, "aspect ratio" is a ratio of a length of the fiber to a diameter of the fiber in the fibrous support.

The fiber in the fibrous support may have a length ranging from about 50 µm to about 20,000 µm, for example, from 100 µm to 5,000 µm or from 3,000 µm to 50,000 µm. For example, the length may be at least 50 µm and/or up to 100 µm, up to 150 µm, up to 200 µm, up to 250 µm, up to 500 µm, up to 750 µm, up to 1,000 µm, up to 2,500 µm, up to 5,000 µm, up to 10,000 µm, up to 15,000 µm, up to 20,000 µm, up to 30,000 µm, up to 40,000 µm or up to 50,000 µm. Within the above range, the first aerogel-containing layer can be firmly formed, and the durability of the heat insulation sheet can be improved. The fibers in the fibrous support may have a diameter ranging from about 0.1 µm to about 20 µm, for example, from 0.1µm to 15µm, from 0.1µm to 5µm, from 1µm to 15µm, or from 3µm to 10µm. Within the above range, the third aerogel-containing layer can be firmly formed, and the durability of the heat insulation sheet can be improved. Herein, "diameter" may be a diameter when a cross section of the fiber is circular, and may be the longest diameter when the above cross section is not circular.

The fibrous support may be included in an amount ranging from about 5 wt% to about 70 wt% of the first aerogel-containing layer. For example, the fibrous support may be included in an amount ranging from 25 wt% to 60 wt%, from 10 wt% to 50 wt%, or from 30 wt% to 50 wt% of the first aerogel-containing layer. For example, the fibrous support may be included in an amount of at least 5 wt% and/or up to 10 wt%, up to 15 wt%, up to 25 wt%, up to 30 wt%, up to 35 wt%, up to 40 wt%, up to 45 wt%, up to 50 wt%, up to 55 wt%, up to 60 wt%, up to 65 wt% or up to 70 wt% of the first aerogel-containing layer. Within the above range, it is possible to readily improve the flexibility and durability of the heat insulation sheet.

The aerogel may provide the heat insulation effect to the first aerogel-containing layer.

According to one example embodiment, the aerogel may have a specific surface area ranging from about 500 m²/g to about 1000 m²/g. For example, the specific surface area may range from 500 m²/g to 950 m²/g, from 550 m²/g to 950 m²/g, or from 600 m²/g to 900 m²/g. For example, the specific surface area may be at least 500 m²/g and/or up to 550 m²/g, up to 600 m²/g, up to 650 m²/g, up to 700 m²/g, up to 750 m²/g, up to 800 m²/g, up to 850 m²/g, up to 900 m²/g, up to 950 m²/g, up to or up to 1000 m²/g. Within the above range, it is possible to readily reduce or prevent heat transfer and heat propagation between a plurality of battery cells. Herein, "specific surface area" may be a specific surface area based on Brunauer Emmett Teller (BET) specific surface area analysis.

According to one example embodiment, the aerogel may have an average particle diameter ranging from about 5 µm to about 200 µm. For example, the aerogel may have an average particle diameter ranging from about 10 µm to about 100 µm or from about 20 µm to about 50 µm. For example, the average particle diameter may be at least 5 µm and/or up to 10 µm, up to 15 µm, up to 20 µm, up to 25 µm, up to 50 µm, up to 75 µm, up to 100 µm, up to 125 µm, up to 150 µm, up to 175 µm or up to200 µm. Within the above range, it is possible to readily delay heat transfer between a plurality of battery cells by improving the heat insulation properties of the heat insulation sheet. Herein, "average particle diameter" is an average particle diameter D50, which refers to a diameter of a particle with a cumulative volume of 50% by volume in the particle size distribution. The average particle diameter D50 may be measured by methods known to those skilled in the art, for example, measured using a particle size analyzer or measured using a transmission electron micrograph or a scanning electron micrograph. As another method, the particle size distribution may be measured using a measurement device using dynamic light scattering, and an average particle diameter D50 value may be obtained by performing data analysis, counting the number of particles in each particle size range, and then calculating the D100 value therefrom. Alternatively, the particle size distribution may be measured using a laser diffraction method. When measuring the average particle diameter by the laser diffraction method, for example, the average particle diameter D50 based on 50% of a particle diameter distribution in the measuring device may be calculated by dispersing particles to be measured in a dispersion medium, then introducing the dispersion medium into a commercially available laser diffraction particle diameter measuring device (e.g., Microtrac's MT 3000), and radiating ultrasonic waves of about 28 kHz at output power of 60 W.

The aerogel may be included in an amount ranging from about 10 wt% to about 90 wt% of the first aerogel-containing layer. For example, the aerogel may be included in an amount ranging from 30 wt% to 70 wt%, from 40 wt% to 80 wt%, or from 40 wt% to 60 wt% of the first aerogel-containing layer. For example, the amount may be at least 10 wt% and/or up to 20 wt%, up to 30 wt%, up to 40 wt%, up to 50 wt%, up to 60 wt%, up to 70 wt%, up to 80 wt% or up to 90 wt%. Within the above range, the heat insulation properties of the heat insulation sheet can be improved.

The binder can readily improve the dust resistance of the heat insulation sheet.

According to one example embodiment, the binder may be or include a water-based binder. The water-based binder has high solubility in water among solvents to be described below, and thus may allow the aerogel-containing layer to be readily formed.

According to one example embodiment, the water-based binder may include one or more of a cationic water-soluble polymer, an anionic water-soluble polymer, and a nonionic water-soluble polymer.

The cationic water-soluble polymer may be or include a polymer having a functional group such as at least one of an amine group, an ammonium group, a phosphonium group, a sulfonium group, or a salt thereof, for example, a polymer having an amine group. For example, the cationic water-soluble polymer may include one or more of polyethyleneamine and polyamine.

The anionic water-soluble polymer may be or include a polymer having a functional group such as at least one of a carboxylic acid group, a sulfonic acid group, an ester group, a phosphoric acid ester group, or a salt thereof, for example, a polymer having a carboxylic acid group. For example, the anionic water-soluble polymer may be polymaleic acid.

The nonionic water-soluble polymer may include one or more of polyvinyl alcohol, polyethylene glycol, polyacrylamide, polyvinylpyrrolidone, polyurethane, and polyester. The nonionic water-soluble polymer may be or include a water-dispersible or water-based polymer.

According to one example embodiment, the binder may include a mixture of one or more of polyvinyl alcohol, polyethylene glycol, polyacrylamide, and polyvinylpyrrolidone, and one or more of polyurethane and polyester. **In** this case, it may be possible to provide dispersion characteristics by one or more of polyvinyl alcohol, polyethylene glycol, polyacrylamide, and polyvinylpyrrolidone, and fire resistance properties by one or more of polyurethane and polyester.

For example, one or more of polyvinyl alcohol and polyurethane may be included as the binder.

According to one example embodiment, a weight ratio of one or more of polyvinyl alcohol, polyethylene glycol, polyacrylamide, and polyvinylpyrrolidone to one or more of polyurethane and polyester ranges from about 1:1 to about 1:5, for example, from 1: 1 to 1:4 or from 1:2 to 1:3. For example, the weight ratio may be up to 1: 1 and/or at least 1:2, at least 1:3, at least 1:4 or at least 1:5. Within the above range, the heat insulation, dust resistance, fire resistance, and mechanical properties of the heat insulation sheet can be improved.

The binder may be included in an amount ranging from about 0.3 wt% to about 25 wt% of the first aerogel-containing layer. Within the above range, the above effects of the heat insulation sheet can be readily achieved. For example, the binder may be included in an amount ranging from about 0.5 wt% to about 20 wt%, from 2 wt% to 15 wt%, or from 8 wt% to 15 wt% of the first aerogel-containing layer. For example, the amount may be at least 0.3 wt% and/or up to 0.5 wt%, up to 1 wt%, up to 1.5 wt%, up to 2 wt%, up to 2.5 wt%, up to 5 wt%, up to 7.5 wt%, up to 10 wt%, up to 12 wt%, up to 15 wt%, up to 17 wt%, up to 20 wt%, up to 22 wt% or up to 25 wt%. Within the above range, it is possible to readily improve the dust resistance of the heat insulation sheet.

According to one example embodiment, a total of the fibrous support, the aerogel, and the binder may be in a range of about 95 wt% or more, for example, may range from 95 wt% to 100 wt%, from 99 wt% to 100 wt%, or 100 wt% of the first aerogel-containing layer. For example, the total may be at least 95 wt% and/or up to 96 wt%, up to 97 wt%, up to 98 wt%, up to 99 wt% or up to 100 wt%.

The first aerogel-containing layer may further include one or more of a dispersant and a silane-based compound.

The dispersant can improve the dispersion of the aerogel in a composition for a first aerogel-containing layer, thereby enabling the manufacturing of a first aerogel-containing layer in which the fibrous support and the aerogel are substantially uniformly dispersed.

The dispersant may include one or more of a surfactant and a phosphorus salt. The surfactant may include one or more of a nonionic surfactant, anionic surfactant, and zwitterionic surfactant. The surfactant may include one or more of natural surfactants such as lecithin and non-natural surfactants such as chemicals. The phosphorus salt may be or include a phosphate-based salt.

The dispersant may be included in an amount ranging from about 0.1 wt% to about 6 wt% of the first aerogel-containing layer. For example, the dispersant may be included in an amount ranging from 0.1 wt% to 5 wt% or from 0.1 wt% to 3 wt%. For example, the amount may be at least 0.1 wt% and/or up top 0.2 wt%, up top 0.5 wt%, up top 0.75 wt%, up top 1 wt%, up top 1.25 wt%, up top 1.5 wt%, up top 2 wt%, up top 3 wt%, up top 4 wt%, up top 5 wt% or up to6 wt%. Within the above range, it is possible to manufacture the composition for a first aerogel-containing layer at low cost and provide a heat insulation sheet with further improved heat insulation, durability, and dust resistance.

According to one example embodiment, the binder and the dispersant may be included in a weight ratio of about 1:0.001 to about 1:0.7, for example, 1:0.001 to 1:0.67, 1:0.001 to 1:0.5, or 1:0.001 to 1:0.3. For example, the weight ration may be up to 1:0.001 and/or at least 1:0.01, at least 1:0.1, at least 1:0.2, at least 1:0.3, at least 1:0.4, at least 1:0.5, at least 1:0.6 or at least 1:0.7. Within the above range, when the binder and the dispersant are included together, it is possible to manufacture a first aerogel-containing layer in which the aerogel is further uniformly dispersed.

The silane-based compound can improve the dispersibility of the aerogel in the first aerogel-containing layer.

According to one example embodiment, the silane-based compound may include one or more of alkyl group-containing trialkoxysilanes such as methyltrimethoxysilane, methyltriethoxysilane, ethyltrimethoxysilane, ethyltriethoxysilane, or octadecyltrimethoxysilane, epoxy group-containing trialkoxysilanes such as glycidoxypropyltrimethoxysilane, and unsaturated group-containing trialkoxysilanes such as 3-(trimethoxysilyl)propyl methacrylate.

The first aerogel-containing layer may further include typical additives known to those skilled in the art. The additives include one or more of wetting agents, emulsifiers, compatibilizers, viscosity regulators, pH regulators, stabilizers, antioxidants, acidic or basic trapping agents, metal deactivators, antifoaming agents, antistatic agents, thickeners, adhesion improvers, binders, flame retardants, impact modifiers, pigments, dyes, colorants, and deodorants.

According to one example embodiment, the first aerogel-containing layer may have a thickness ranging from about 0.01 mm to about 10 mm, for example, from 0.1 mm to 5 mm, from 0.3 mm to 1 mm, or from 0.1 mm to 1 mm. For example, the thickness may be at least 0.01 mm and/or up to 0.02 mm, up to 0.05 mm, up to 0.07 mm, up to 0.1 mm, up to 0.25 mm, up to 0.5 mm, up to 0.75 mm, up to 1 mm, up to 2.5 mm, up to 5 mm, up to 7.5 mm or up to 10 mm. Within the above range, the first aerogel-containing layer may be included in the heat insulation sheet.

The first aerogel-containing layer may be formed using the composition for an aerogel-containing layer including the fibrous support, the aerogel, and the binder. The composition for an aerogel-containing layer may further include one or more of the dispersant, the silane-based compound, and the additive.

In one example embodiment, the composition for an aerogel-containing layer may include the fibrous support in an amount ranging from about 5 wt% to about 70 wt%, for example, from 25 wt% to 60 wt%, from 10 wt% to 50 wt%, or 30 wt% to 50%, the aerogel in an amount ranging from about 10 wt% to about 90 wt%, for example, from 30 wt% to 70 wt%, from 40 wt% to 80 wt%, or from 40 wt% to 60 wt%, and the binder in an amount ranging from about 0.3 wt% to about 25 wt%, from 0.5 wt% to 20 wt%, from 2 wt% to 15 wt%, or from 8 wt% to 15 wt% based on solid content. For example, the amount may be at least 5 wt% and/or up to 10 wt% and/or up to 20 wt%, up to 30 wt%, up to 40 wt%, up to 50 wt%, up to 60 wt%, up to 65 wt % or up to 70 wt%.

An example method of manufacturing the first aerogel-containing layer is described in detail below.

### Second aerogel-containing layer

The second aerogel-containing layer includes an aerogel and a binder. The second aerogel-containing layer is substantially the same as the first aerogel-containing layer, with a difference that the second aerogel-containing layer does not substantially include a fibrous support.

According to one example embodiment, the content of the fibrous support in the second aerogel-containing layer may be about 0 wt%. Herein, "fibrous support" is substantially the same as described in the first aerogel-containing layer.

The aerogel may exhibit the heat insulation effect to the second aerogel-containing layer.

According to one example embodiment, the aerogel may have a specific surface area ranging from about 500 m²/g to about 1000 m²/g. For example, the specific surface area may range from 500 m²/g to 950 m²/g, 550 m²/g to 950 m²/g, or 600 m²/g to 900 m²/g. Within the above range, it is possible to readily reduce or prevent heat transfer and heat propagation between a plurality of battery cells. For example, the specific surface area may be at least 500 m²/g and/or up to 550 m²/g, up to 600 m²/g, up to 650 m²/g, up to 700 m²/g, up to 750 m²/g, up to 800 m²/g, up to 850 m²/g, up to 900 m²/g, up to 950 m²/g, up to or up to 1000 m²/g.

According to one example embodiment, the aerogel may have an average particle diameter ranging from about 5 µm to about 200 µm. For example, the aerogel may have an average particle diameter ranging from 10 µm to 100 µm or from 20 µm to 50 µm. Within the above range, it is possible to readily delay heat transfer between the plurality of battery cells by improving the heat insulation properties of the heat insulation sheet. For example, the average particle diameter may be at least 5 µm and/or up to 10 µm, up to 15 µm, up to 20 µm, up to 25 µm, up to 50 µm, up to 75 µm, up to 100 µm, up to 125 µm, up to 150 µm, up to 175 µm or up to200 µm.

According to one example embodiment, a total of the aerogel and the binder may be in a range of about 95 wt% or more, for example, may range from 95 wt% to 100 wt%, from 99 wt% to 100 wt%, or 100 wt% of the second aerogel-containing layer. For example, the total may be at least 95 wt% and/or up to 96 wt%, up to 97 wt%, up to 98 wt%, up to 99 wt% or up to 100 wt%.

The content of the aerogel in the second aerogel-containing layer may be higher than the content of the aerogel in the first aerogel-containing layer or the third aerogel-containing layer. Therefore, the heat insulation sheet can readily exhibit desired or improved heat insulation properties.

According to one example embodiment, the aerogel may be included in an amount ranging from about 50 wt% to about 99 wt% of the second aerogel-containing layer. For example, the aerogel may be included in an amount ranging from 60 wt% to 99 wt% or from 60 wt% to 90 wt% of the second aerogel-containing layer. For example, the amount may be at least 50 wt% and/or up to 60 wt%, up to 70 wt%, up to 80 wt%, up to 90 wt%, up to 95 wt% or up to 99 wt%. Within the above range, the heat insulation properties of the heat insulation sheet can be improved.

The binder can readily improve the dust resistance of the heat insulation sheet.

According to one example embodiment, the binder may be or include a water-based binder. The water-based binder has high solubility in water among solvents to be described below, and thus may allow the aerogel-containing layer to be readily formed.

According to one example embodiment, the water-based binder may include one or more of a cationic water-soluble polymer, an anionic water-soluble polymer, and a nonionic water-soluble polymer. The cationic water-soluble polymer, the anionic water-soluble polymer, and the nonionic water-soluble polymer are substantially the same as the cationic water-soluble polymer, the anionic water-soluble polymer, and the nonionic water-soluble polymer described for the first aerogel-containing layer.

According to one example embodiment, the water-based binder may be or include polyvinyl alcohol.

According to one example embodiment, the water-based binder may include a mixture of one or more of polyvinyl alcohol, polyethylene glycol, polyacrylamide, and polyvinylpyrrolidone, and one or more of polyurethane and polyester. For example, it may be possible to provide dispersion characteristics by one or more of polyvinyl alcohol, polyethylene glycol, polyacrylamide, and polyvinylpyrrolidone, and fire resistance properties by one or more of polyurethane and polyester. For example, a mixture of polyvinyl alcohol and polyurethane may be included.

According to one example embodiment, a weight ratio of one or more of polyvinyl alcohol, polyethylene glycol, polyacrylamide, and polyvinylpyrrolidone to one or more of polyurethane and polyester ranges from about 1:1 to about 1:5, for example, from 1: 1 to 1:4 or from 1:2 to 1:3. For example, the ration may be up to 1: 1 and/or at least 1:2, at least 1:3, at least 1:4 or at least 1:5. Within the above range, the heat insulation, dust resistance, fire resistance, and mechanical properties of the heat insulation sheet can be improved.

The binder may be included in an amount ranging from about 1 wt% to about 50 wt% of the second aerogel-containing layer. For example, the binder may be included in an amount ranging from 1 wt% to 40 wt%, from 10 wt% to 40 wt%, or from 10 wt% to 30 wt% of the second aerogel-containing layer. For example, the amount may be at least 1 wt% and/or up to 2 wt%, up to 5 wt%, up to 10 wt%, up to 15 wt%, up to 20 wt%, up to 25 wt%, up to 30 wt%, up to 35 wt%, up to 40 wt%, up to 45 wt% or up to 50 wt%. Within the above range, it is possible to readily improve the dust resistance of the heat insulation sheet.

The second aerogel-containing layer may further include one or more of a dispersant and a silane-based compound.

The dispersant can improve the dispersion of the aerogel in a composition for a second aerogel-containing layer, thereby enabling the manufacturing of a second aerogel-containing layer in which the aerogel is uniformly dispersed. The detailed types of the dispersant are substantially the same as the types of dispersant described for the first aerogel-containing layer.

The dispersant may be included in an amount ranging from about 0.1 wt% to about 6 wt% of the second aerogel-containing layer. For example, the dispersant may be included in an amount ranging from 0.1 wt% to 5 wt% or from 0.1 wt% to 3 wt%. For example, the amount may be at least 0.1 wt% and/or up to 0.5 wt%, 1 wt%, up to 1.5 wt%, up to 2 wt%, up to 2.5 wt%, up to 3 wt%, up to 3.5 wt%, up to 4 wt%, up to 4.5 wt%, up to 5 wt%, up to 5.5 wt% or up to 6 wt% Within the above range, it is possible to manufacture the composition for a second aerogel-containing layer at low cost and provide a heat insulation sheet with further improved heat insulation, durability, and dust resistance.

According to one example embodiment, the binder and the dispersant may be included in a weight ratio of about 1:0.001 to about 1:0.7, for example, 1:0.001 to 1:0.67, 1:0.001 to 1:0.5, or 1:0.001 to 1:0.3. For example, the weight ration may be up to 1:0.001 and/or at least 1:0.01, at least 1:0.1, at least 1:0.2, at least 1:0.3, at least 1:0.4, at least 1:0.5, at least 1:0.6 or at least 1:0.7. Within the above range, when the binder and the dispersant are included together, it is possible to manufacture a second aerogel-containing layer in which the aerogel is further uniformly dispersed.

The silane-based compound can improve the dispersibility of the aerogel in the second aerogel-containing layer. The detailed types of silane-based compounds are substantially the same as the types described above.

The second aerogel-containing layer may further include typical additives known to those skilled in the art. The detailed types of additives are substantially the same as the additives described for the first aerogel-containing layer.

According to one example embodiment, a thickness of the second aerogel-containing layer may be greater than a thickness of each of the first aerogel-containing layer and the third aerogel-containing layer. In this case, the above effects of the heat insulation sheet can be readily achieved.

According to one example embodiment, the second aerogel-containing layer may have a thickness ranging from about 0.01 mm to about 10 mm, for example, from 0.1 mm to 5 mm, or from 1 mm to 3 mm. For example, the thickness may be at least 0.01 mm and/or up to 0.02 mm, up to 0.05 mm, up to 0.07 mm, up to 0.1 mm, up to 0.25 mm, up to 0.5 mm, up to 0.75 mm, up to 1 mm, up to 2.5 mm, up to 5 mm, up to 7.5 mm or up to 10 mm. Within the above range, the second aerogel-containing layer may be included in the heat insulation sheet.

The second aerogel-containing layer may be formed using the composition for an aerogel-containing layer including the aerogel and the binder. The composition for an aerogel-containing layer may further include one or more of the dispersant, the silane-based compound, and the additive.

In one example embodiment, the composition for a second aerogel-containing layer may include the aerogel in an amount ranging from about 50 wt% to about 99 wt%, for example, from 60 wt% to 99 wt% or from 60 wt% to 90 wt% and the binder in an amount ranging from about 1 wt% to about 50 wt%, for example, from 1 wt% to 40 wt% or from 10 wt% to 30 wt% based on solid content. For example, the amount may be at least 50 wt% and/or up to 60 wt%, up to 70 wt%, up to 80 wt%, up to 90 wt%, up to 95 wt% or up to 99 wt%. Within the above range, it is possible to readily improve the dust resistance of the heat insulation sheet.

A method of manufacturing the second aerogel-containing layer is described in detail below.

### Third aerogel-containing layer

The third aerogel-containing layer includes a fibrous support, an aerogel, and a binder.

The fibrous support may readily support the third aerogel-containing layer and improve the compression properties of the heat insulation sheet.

For example, the fibrous support may be or include a wool mat or a chopped strand mat.

Fibers constituting the fibrous support may include one or more of natural fibers, glass fibers, carbon fibers, graphite fibers, mineral fibers, and polymer fibers. For example, the compression properties of the fibrous support can be further improved by using glass fibers.

The natural fiber may be or include a fiber made of or including one or more of hemp, jute, flax, coir, kenaf, and cellulose. The mineral fiber may be or include a fiber made of or including one or more of basalt, wollastonite, alumina, silica, slag, and rock. The polymer fiber may be or include a fiber made of or including one or more of nylons, polyimides; polyamides, polybenzimidazoles, polybenzoxazoles, polyamide-imides, polyesters such as polyethylene terephthalate and polybutylene terephthalate, and polyolefins such as polyethylene and polypropylene.

For example, the fibrous support may be or include glass wool.

The fibers in the fibrous support may have an aspect ratio ranging from about 1 to about 5000, for example, from 300 to 5000 or from 2.5 to 2500. For example, the aspect ratio may be at least 1 and/or up to 2, up to 2.5, up to 5, up to 10, up to 25, up to 50, up to 100, up to 250, up to 500, up to 1000, up to 1500, up to 2000, up to 2500, up to 3000, up to 3500, up to 4000, up to 4500 or up to 5000. Within the above range, the aerogel-containing layer can be firmly formed, and the durability of the heat insulation sheet can be improved.

The fiber in the fibrous support may have a length ranging from about 50 µm to about 20,000 µm, for example, from 100 µm to 5,000 µm or from 3,000 µm to 50,000 µm. For example, the length may be at least 50 µm and/or up to 100 µm, up to 150 µm, up to 200 µm, up to 250 µm, up to 500 µm, up to 750 µm, up to 1,000 µm, up to 2,500 µm, up to 5,000 µm, up to 10,000 µm, up to 15,000 µm, up to 20,000 µm, up to 30,000 µm, up to 40,000 µm or up to 50,000 µm. Within the above range, the third aerogel-containing layer can be firmly formed, and the durability of the heat insulation sheet can be improved.

The fibers in the fibrous support may have a diameter ranging from about 0.1 µm to about 15 µm, for example, from 0.1µm to 15µm, from 0.1µm to 5µm, from 1µm to 15µm, or from 3µm to 10µm. For example, the diameter may be at least 0.1 µm and/or up to 0.5 µm, up to 1 µm, up to 1.5 µm, up to 3 µm, up to 5 µm, up to 7.5 µm, up to 10 µm, up to 12.5 µm or up to 15 µm. Within the above range, the third aerogel-containing layer can be firmly formed, and the durability of the heat insulation sheet can be improved. Herein, "diameter" may be a diameter when a cross section of the fiber is circular, and may be the longest diameter when the above cross section is not circular.

The fibrous support may be included in an amount ranging from about 5 wt% to 70 wt% of the third aerogel-containing layer. For example, the fibrous support may be included in an amount ranging from 25 wt% to 60 wt% or from 30 wt% to 50 wt% of the third aerogel-containing layer. For example, the amount may be at least 5 wt% and/or up to 10 wt% and/or up to 20 wt%, up to 30 wt%, up to 40 wt%, up to 50 wt%, up to 60 wt%, up to 65 wt % or up to 70 wt%. Within the above range, it is possible to readily improve the flexibility and durability of the heat insulation sheet.

The aerogel may provide the heat insulation effect to the third aerogel-containing layer.

According to one example embodiment, the aerogel may have a specific surface area ranging from about 500 m²/g to about 1000 m²/g. For example, the specific surface area may range from 500 m²/g to 950 m²/g, 550 m²/g to 950 m²/g, or 600 m²/g to 900 m²/g. For example, the specific surface area may be at least 500 m²/g and/or up to 550 m²/g, up to 600 m²/g, up to 650 m²/g, up to 700 m²/g, up to 750 m²/g, up to 800 m²/g, up to 850 m²/g, up to 900 m²/g, up to 950 m²/g, up to or up to 1000 m²/g. Within the above range, it is possible to readily reduce or prevent heat transfer and heat propagation between a plurality of battery cells.

According to one example embodiment, the aerogel may have an average particle diameter ranging from about 5 µm to about 200 µm. For example, the aerogel may have an average particle diameter ranging from 10 µm to 100 µm or from 20 µm to 50 µm. For example, the average particle diameter may be at least 5 µm and/or up to 10 µm, up to 15 µm, up to 20 µm, up to 25 µm, up to 50 µm, up to 75 µm, up to 100 µm, up to 125 µm, up to 150 µm, up to 175 µm or up to200 µm. Within the above range, it is possible to readily delay heat transfer between the plurality of battery cells by improving the heat insulation properties of the heat insulation sheet.

The aerogel may be included in an amount ranging from about 10 wt% to about 90 wt% of the third aerogel-containing layer. For example, the aerogel may be included in an amount ranging from 30 wt% to 70 wt% or from 40 wt% to 60 wt% of the third aerogel-containing layer. For example, the amount may be at least 10 wt% and/or up to 20 wt%, up to 30 wt%, up to 40 wt%, up to 50 wt%, up to 60 wt%, up to 70 wt%, up to 80 wt% or up to 90 wt%. Within the above range, the heat insulation properties of the heat insulation sheet can be improved.

The binder can readily improve the dust resistance of the heat insulation sheet.

According to one example embodiment, the binder may be or include a water-based binder. The water-based binder has high solubility in water among solvents to be described below, and thus may allow the aerogel-containing layer to be readily formed.

According to one example embodiment, the water-based binder may include one or more of a cationic water-soluble polymer, an anionic water-soluble polymer, and a nonionic water-soluble polymer.

The cationic water-soluble polymer may be or include a polymer having a functional group such as at least one of an amine group, an ammonium group, a phosphonium group, a sulfonium group, or a salt thereof, for example, a polymer having an amine group. For example, the cationic water-soluble polymer may include one or more of polyethyleneamine and polyamine.

The anionic water-soluble polymer may be or include a polymer having a functional group such as at least one of a carboxylic acid group, a sulfonic acid group, an ester group, a phosphoric acid ester group, or a salt thereof, for example, a polymer having a carboxylic acid group. For example, the anionic water-soluble polymer may be polymaleic acid.

The nonionic water-soluble polymer may include one or more of polyvinyl alcohol, polyethylene glycol, polyacrylamide, polyvinylpyrrolidone, polyurethane, and polyester. The nonionic water-soluble polymer may be or include a water-dispersible or water-based polymer.

According to one example embodiment, the binder may include a mixture of one or more of polyvinyl alcohol, polyethylene glycol, polyacrylamide, and polyvinylpyrrolidone, and one or more of polyurethane and polyester. **In** this case, it may be possible to provide dispersion characteristics by one or more of polyvinyl alcohol, polyethylene glycol, polyacrylamide, and polyvinylpyrrolidone, and fire resistance properties by one or more of polyurethane and polyester.

For example, one or more of polyvinyl alcohol and polyurethane may be included as the binder.

According to one example embodiment, a weight ratio of one or more of polyvinyl alcohol, polyethylene glycol, polyacrylamide, and polyvinylpyrrolidone to one or more of polyurethane and polyester ranges from about 1:1 about to 1:5, for example, from 1: 1 to 1:4 or from 1:2 to 1:3. For example, the weight ratio may be up to 1: 1 and/or at least 1:2, at least 1:3, at least 1:4 or at least 1:5. Within the above range, the heat insulation, dust resistance, fire resistance, and mechanical properties of the heat insulation sheet can be improved.

The binder may be included in an amount ranging from about 0.3 wt% to about 25 wt% of the third aerogel-containing layer. For example, the binder may be included in an amount ranging from 0.5 wt% to 20 wt%, from 2 wt% to 15 wt%, or from 8 wt% to 15 wt% of the third aerogel-containing layer. For example, the amount may be at least 0.3 wt% and/or up to 0.5 wt%, up to 1 wt%, up to 1.5 wt%, up to 2 wt%, up to 2.5 wt%, up to 5 wt%, up to 7.5 wt%, up to 10 wt%, up to 12 wt%, up to 15 wt%, up to 17 wt%, up to 20 wt%, up to 22 wt% or up to 25 wt%. Within the above range, it is possible to readily improve the dust resistance of the heat insulation sheet.

According to one example embodiment, a total of the fibrous support, the aerogel, and the binder may be in a range of about 95 wt% or more, for example, may range from 95 wt% to 100 wt%, from 99 wt% to 100 wt%, or 100 wt% of the third aerogel-containing layer. For example, the total may be at least 95 % and/or up to 96 %, up to 97 %, up to 98 %, up to 99 % or up to 100 %.

The third aerogel-containing layer may further include one or more of a dispersant, a silane-based compound, and an additive. The dispersant, the silane-based compound, and the additive may each be substantially the same as the dispersant, the silane-based compound, and the additive described for the first aerogel-containing layer.

According to one example embodiment, the third aerogel-containing layer may have a thickness ranging from about 0.01 mm to about 10 mm, for example, from 0.1 mm to 5 mm or from 0.1 mm to 1 mm. For example, the thickness may be at least 0.01 mm and/or up to 0.02 mm, up to 0.05 mm, up to 0.07 mm, up to 0.1 mm, up to 0.25 mm, up to 0.5 mm, up to 0.75 mm, up to 1 mm, up to 2.5 mm, up to 5 mm, up to 7.5 mm or up to 10 mm.Within the above range, the third aerogel-containing layer may be included in the heat insulation sheet.

The third aerogel-containing layer may be formed using the composition for an aerogel-containing layer including the fibrous support, the aerogel, and the binder. The composition for an aerogel-containing layer may further include one or more of the dispersant, the silane-based compound, and the additive.

In one example embodiment, the composition for an aerogel-containing layer may include the fibrous support in an amount ranging from about 5 wt% to about 70 wt%, for example, from 25 wt% to 60 wt% or 30 wt% to 50%, the aerogel in an amount ranging from about 10 wt% to about 90 wt%, for example, from 30 wt% to 70 wt% or from 40 wt% to 60 wt%, and the binder in an amount ranging from about 0.5 wt% to about 25 wt%, for example, from 2 wt% to 15 wt% or from 8 wt% to 15 wt% based on solid content. For example, the amount may be at least 5 wt% and/or up to 10 wt% and/or up to 20 wt%, up to 30 wt%, up to 40 wt%, up to 50 wt%, up to 60 wt%, up to 65 wt % or up to 70 wt%.

A method of forming the third aerogel-containing layer is described in detail below.

### Second base layer

The second base layer may support the first aerogel-containing layer, the second aerogel-containing layer, and the third aerogel-containing layer of the heat insulation sheet.

The second base layer may be stacked on the third aerogel-containing layer. The third aerogel-containing layer may be or include a separate layer that is independent of the second base layer. Herein, "separate layer that is independent of" indicates that the third aerogel-containing layer is not formed through impregnation, and the like, in the second base layer, but that the second base layer and the third aerogel-containing layer are formed as layers that are substantially completely separated and noncontinuous.

The second base layer may be formed of or include at least one of a film, a thin film, or a sheet formed of or including a resin, a metal-based inorganic material, inorganic materials other than the metal-based material, or a composite thereof. The resin, the metal-based inorganic material, and the inorganic materials other than the metal-based material are substantially the same as the resin, the metal-based inorganic material, and the inorganic materials of the first base layer.

According to one example embodiment, the heat insulation sheet may include inorganic materials other than the metal-based material as the second base layer, and for example include a mica sheet. Mica can improve the heat insulation properties and durability of the heat insulation sheet.

The second base layer may have a thickness ranging from about 0.1 mm to about 10 mm, for example, from 0.3 mm to 5 mm or from 0.5 mm to 3 mm. For example, the thickness may be at least 0.1 mm and/or up to 0.2 mm, up to 0.3 mm, up to 0.4 mm, up to 0.5 mm, up to 0.7 mm, up to 1 mm, up to 2 mm, up to 3 mm, up to 4 mm, up to 5 mm, up to 6 mm, up to 7 mm, up to 8 mm, up to 9 mm or up to 10 mm. Within the above range, the second base layer may be included in the heat insulation sheet.

### BRIEF DESCRIPTION OF THE DRAWINGS

FIG. 1 is a cross-sectional view of a heat insulation sheet for a rechargeable lithium battery, according to one example embodiment.
FIG. 2 is a cross-sectional view of a heat insulation sheet for a rechargeable lithium battery, according to another example embodiment.
FIG. 3 is a perspective view of a rechargeable lithium battery module, according to one example embodiment.
FIG. 4 is an exploded perspective view of the rechargeable lithium battery module, according to one example embodiment.
FIG. 5 is a cross-sectional view schematically illustrating a battery cell, according to one example embodiment.
FIG. 6 is a cross-sectional view schematically illustrating a battery pack, according to one example embodiment.
FIG. 7 is a cross-sectional view schematically illustrating the battery pack, according to one example embodiment.
FIG. 8 is a view illustrating a vehicle body and vehicle body parts, according to one example embodiment.
FIG. 9 is a view illustrating a vehicle body and vehicle body parts, according to one example embodiment.

### DETAILED DESCRIPTION

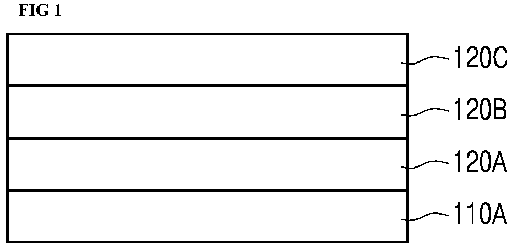

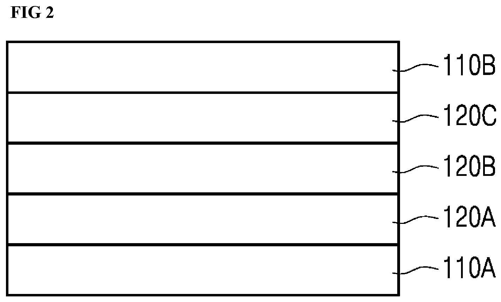

FIGS. 1 and 2 are cross-sectional views of a heat insulation sheet for a rechargeable lithium battery, according to one example embodiment.

Referring to FIG. 1, the heat insulation sheet for a rechargeable lithium battery may include a first base layer 110A, and a first aerogel-containing layer 120A, a second aerogel-containing layer 120B, and a third aerogel-containing layer 120C that are stacked, e.g., sequentially stacked, on the first base layer 110A.

Referring to FIG. 2, the heat insulation sheet for a rechargeable lithium battery may include a first base layer 110A, a second base layer 110B formed to face the first base layer 110A, and a first aerogel-containing layer 120A, a second aerogel-containing layer 120B, and a third aerogel-containing layer 120C, which are stacked, e.g., sequentially stacked, on the first base layer 110A and between the first base layer 110A and the second base layer 110B.

Hereinafter, a method of manufacturing the heat insulation sheet according to one example embodiment is described.

The method of manufacturing the heat insulation sheet may include preparing a composition for a first aerogel-containing layer and a composition for a third aerogel-containing layer that include a fibrous support, an aerogel, and a binder, preparing a composition for a second aerogel-containing layer including an aerogel and a binder, forming the first aerogel-containing layer on a first base layer using the composition for a first aerogel-containing layer, forming the second aerogel-containing layer on the first aerogel-containing layer using the composition for a second aerogel-containing layer, and forming the third aerogel-containing layer on the second aerogel-containing layer using the composition for a third aerogel-containing layer.

One or more of the composition for a first aerogel-containing layer and the composition for a third aerogel-containing layer includes a fibrous support, an aerogel, and a binder. The fibrous support, the aerogel, and the binder are the same as described above.

The compositions for first and third aerogel-containing layers may further include one or more of the above-described dispersant, silane-based compound, and additive.

The composition for an aerogel-containing layer may further include a solvent.

The solvent may include one or more of a polar solvent and a non-polar solvent.

The polar solvent may include water, an alcohol-based solvent, or a combination thereof. The water may include, for example, at least one of purified water, ultrapure water, or a combination thereof. The alcohol-based solvent may include, for example, one or more of methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may include one or more of aliphatic hydrocarbon solvents such as hexane, pentane, and heptane, for example, alkane solvents and aromatic hydrocarbon solvents such as toluene and benzene.

For example, the solvent may include water. When water is included as a solvent, raw material costs and post-treatment costs can be effectively reduced.

The solvent may be included so that a weight ratio of the solvent and a total solid content of the composition for a first or third aerogel-containing layer ranges from about 1:1 to about 1:90. For example, the weight ratio of the solvent and the total solid content of the composition for an aerogel-containing layer may range from about 1:1 to about 10:1, from 1.5:1 to 5:1, or from 2:1 to 4:1. Within the above range, the composition for an aerogel-containing layer may be coated by controlling the viscosity of the composition for an aerogel-containing layer. The compositions for first and third aerogel-containing layers may be prepared using the fibrous support, the aerogel, and the binder.

According to one example embodiment, the compositions for first and third aerogel-containing layers may include preparing a first mixed solution by mixing the binder with the solvent, preparing a second mixed solution by mixing an aerogel with the first mixed solution, and preparing the composition for an aerogel-containing layer by mixing a fibrous support with the second mixed solution. In the preparing of the first mixed solution, the dispersant, the silane-based compound, the additive, and the like, may be additionally mixed.

When mixing in each of the first operation, the second operation, and the preparing of the composition for an aerogel-containing layer, the mixing may be performed using a mixer. Examples of the mixer may include a planetary mixer, a Thinky mixer, and the like.

The planetary mixer may include one or more types of planetary blades and one or more types of high-speed dispersion blades. The planetary blade and the high-speed dispersion blade rotate continuously about their axes. A rotational speed may be expressed in revolutions per minute (rpm).

According to one example embodiment, the planetary mixer may include a first blade and a second blade that have different rotational axes. For example, the first blade may be a low-speed blade, and the second blade may be a high-speed blade. Herein, low speed and high speed are relative rotational speeds. For example, the first blade may be an open blade, and the second blade may be a despa blade. A rotational speed of the first blade may range from, for example, about 10 rpm to about 100 rpm or from 10 rpm to 60 rpm. A rotational speed of the second blade may range from about 100 rpm to about 2000 rpm.

The composition for a second aerogel-containing layer may also be prepared using the above-described mixer.

The first aerogel-containing layer, the second aerogel-containing layer, and the third aerogel-containing layer may be manufactured by applying and drying the composition for a first aerogel-containing layer, the composition for a second aerogel-containing layer, and the composition for a third aerogel-containing layer, respectively. The drying may be performed at a temperature ranging from about 25 °C to about 100 °C, from 45 °C to 90 °C, and from 60 °C to 85 °C. Within the above range, an aerogel-containing layer with desired or improved mechanical strength may be formed without a separate adhesive member, or an adhesive, while reducing or preventing peeling between the first base layer and the first aerogel-containing layer, peeling between the first aerogel-containing layer and the second aerogel-containing layer, and peeling between the second aerogel-containing layer and the third aerogel-containing layer may be formed.

According to one example embodiment, before performing the drying, a second base layer may be additionally stacked on the applied composition for a third aerogel-containing layer.

Rechargeable lithium battery:
Another example embodiment includes a rechargeable lithium battery module including a plurality of battery cells that face each other, and heat insulating sheets for a rechargeable lithium battery between the plurality of battery cells.

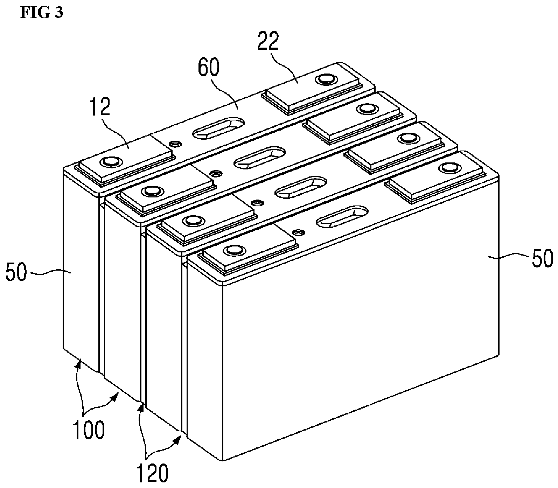

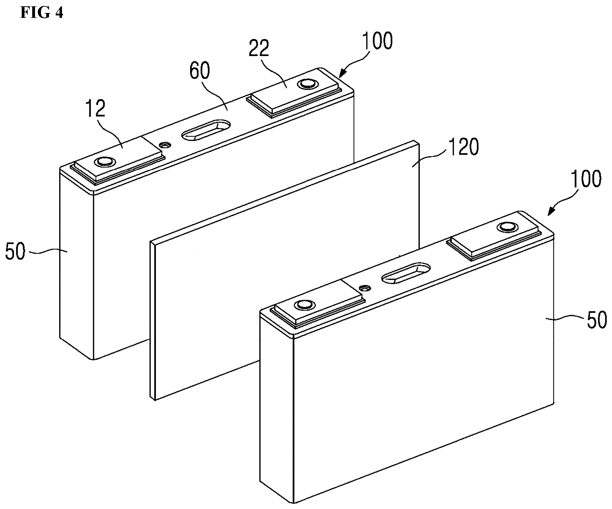

FIGS. 3 and 4 are a perspective view and an exploded perspective view, respectively, of a rechargeable lithium battery module, according to one example embodiment.

Referring to FIGS. 3 and 4, a rechargeable lithium battery module may include a plurality of battery cells 100 that face each other, and heat insulating sheets 200 between the battery cells 100.

The heat insulating sheet 200 for a rechargeable lithium battery has a plate shape. One surface of the heat insulating sheet 200 may come in contact with one surface of one battery cell 100, and the other surface of the heat insulating sheet 200 opposite to the one surface thereof may come in contact with one surface of another battery cell 100.

The battery cell 100 may include a case 50 configured to accommodate an electrode assembly including a positive electrode and a negative electrode, a cap plate 60 coupled to the case 50 to seal the case 50, and a positive electrode terminal 12 and a negative electrode terminal 22 electrically connected to the positive electrode and the negative electrode of the electrode assembly and protruding to the outside of the cap plate 60.

The positive electrode may include a current collector and a positive electrode active material layer on the current collector. The positive electrode active material layer may include a positive electrode active material, and may further include a binder and/or a conductive additive.

The content of the positive electrode active material may range from about 90 wt% to about 99.5 wt% with respect to 100 wt% of the positive electrode active material layer, and the content of the binder and the content of the conductive additive may each be in a range of about 0.5 wt% to about 5 wt% with respect to 100 wt% of the positive electrode active material layer.

Al may be included as the current collector, but the current collector is not limited thereto.

As the positive electrode active material, a compound capable of reversible intercalation and deintercalation of lithium (a lithiated intercalation compound) may be included. For example, one or more of composite oxides of lithium and a metal such as or including at least one of cobalt, manganese, nickel and a combination thereof may be included.

The composite oxides may be or include lithium transition metal composite oxides. Examples of the composite oxides may include at least one of lithium nickel oxide, lithium cobalt oxide, lithium manganese oxide, a lithium iron phosphate compound, cobalt-free nickel-manganese oxide, or a combination thereof.

As one example, a compound represented by any one of the following chemical formulas may constitute the composite oxide. LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{d}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The negative electrode includes a current collector, and a negative electrode active material layer on the current collector. The negative electrode active material layer may include a negative electrode active material, and may further include a binder and/or a conductive additive.

For example, the negative electrode active material layer may include about 90 wt% to about 99 wt% of the negative electrode active material, about 0.5 wt% to about 5 wt% of the binder, and about 0 wt% to about 5 wt% of the conductive additive.

The negative electrode active material includes at least one of a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions is or includes a carbon-based negative electrode active material, and may include, for example, crystalline carbon, amorphous carbon, or a combination thereof. Examples of the crystalline carbon may include graphite such as natural graphite or artificial graphite, and examples of the amorphous carbon may include at least one of soft carbon, hard carbon, mesophase pitch carbide, and calcinated coke.

A Si-based negative electrode active material or an Sn-based negative electrode active material may be included as the material capable of doping and dedoping lithium. The Si-based negative electrode active material may be or include at least one of silicon, a silicon-carbon composite, SiOₓ (0<x<2), an Si-based alloy, or a combination thereof.

The silicon-carbon composite may be or include a composite of silicon and amorphous carbon. According to one example embodiment, the silicon-carbon composite may have a form including a silicon particle, and amorphous carbon coated on a surface of the silicon particle.

The silicon-carbon composite may further include crystalline carbon. For example, the silicon-carbon composite may include a core including crystalline carbon, and a silicon particle and an amorphous carbon coating layer located on a surface of the core.

A nonaqueous binder, an aqueous binder, a dry binder, or a combination thereof may be included as the binder. When the aqueous binder is included as the negative electrode binder, a cellulose-based compound that can impart viscosity may be further included.

As the negative electrode current collector, at least one of copper foil, nickel foil, stainless steel foil, titanium foil, nickel foam, copper foam, a polymer substrate having a conductive metal coated thereon, or combinations thereof may be included.

An electrolyte for a rechargeable lithium battery includes a nonaqueous organic solvent and a lithium salt.

The nonaqueous organic solvent is configured as a medium through which ions involved in an electrochemical reaction of a battery can move.

The nonaqueous organic solvent may be or include at least one of a carbonate-based, ester-based, ether-based, ketone-based, or alcohol-based solvent, an aprotic solvent, or a combination thereof. Any of the above may be included alone as the nonaqueous organic solvent, or two or more of the above may be mixed and included as the nonaqueous organic solvent.

For example, when the carbonate-based solvent is included, a cyclic carbonate and a chain carbonate may be mixed and included.

A separator may be present between a positive electrode and a negative electrode according to the type of rechargeable lithium battery. At least one of polyethylene, polypropylene, polyvinylidene fluoride, or a multi-layer film of two or more thereof, may be included as the separator.

The separator may include a porous base and a coating layer located on one surface, or both surfaces, of the porous base and including an organic material, an inorganic material, or a combination thereof.

The organic material may include a polyvinylidene fluoride-based polymer or a (meth)acryl-based polymer.

The inorganic material may include an inorganic particle such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and inorganic material may be mixed in a single coating layer, or may be present in a form in which a coating layer including the organic material and a coating layer including the inorganic material are stacked.

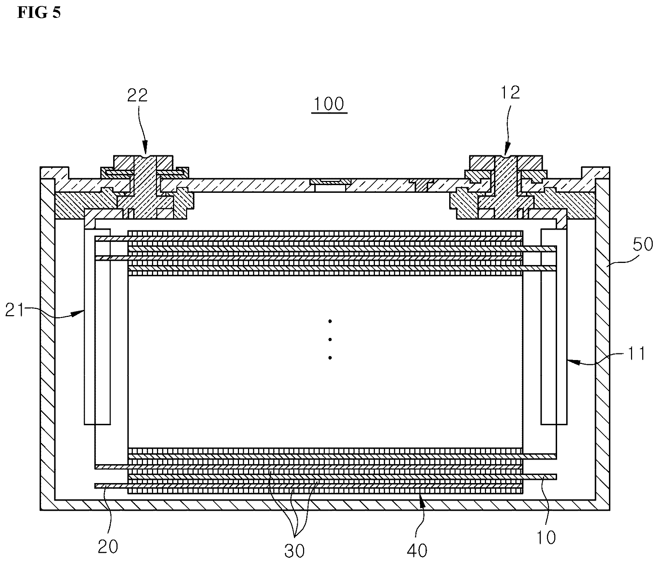

FIG. 5 is a cross-sectional view schematically showing the battery cell 100 according to one embodiment.

Referring to FIG. 5, the battery cell 100 may include an electrode assembly 40 including a positive electrode 10, a negative electrode 20, and a separator 30 interposed between the positive electrode 10 and the negative electrode 20; a case 50 in which the electrode assembly 40 is accommodated; a positive electrode lead tab 11 connected to the positive electrode 10; a positive electrode terminal 12 connected to the positive electrode lead tab 11; a negative electrode lead tab 21 connected to the negative electrode 20; and a negative electrode terminal 22 connected to the negative electrode lead tab 21.

The rechargeable lithium battery module according to one example embodiment may be applicable to, e.g., vehicles, mobile phones, and/or various other forms of electric devices, but the present disclosure is not limited thereto.

The battery module according to the above-described example embodiment may be included in manufacturing a battery pack.

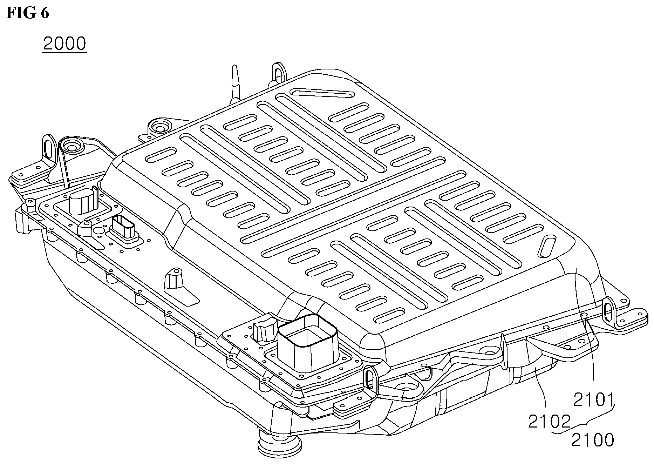

FIG. 6 is a view illustrating a battery pack according to one example embodiment.

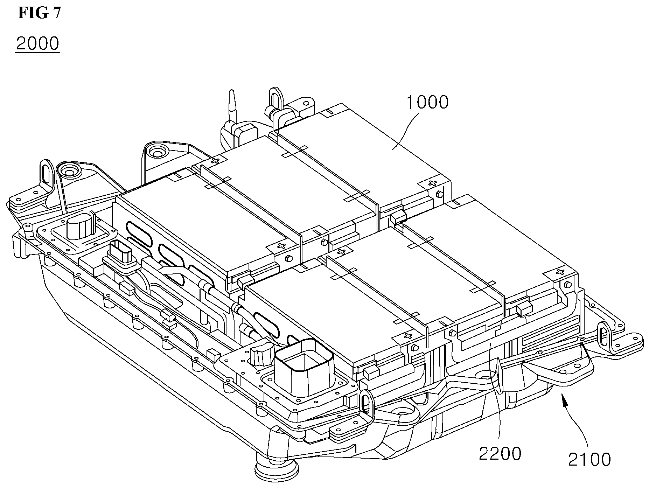

FIG. 7 is a view illustrating a battery pack according to one example embodiment.

A battery pack 2000 according to one example embodiment includes an assembly of electrically connected individual batteries, and a pack case accommodating the assembly of electrically connected individual batteries. In the drawings, for convenience of illustration of the drawings, the illustration of components such as a busbar, a cooling unit, an external terminal, and the like for electrical connection of batteries has been omitted.

For example, the battery pack 2000 may include a plurality of battery modules 1000 (for example, including the battery module described above with reference to FIG. 5) and a pack case 2100 for accommodating the battery modules 1000. For example, the pack case 2100 may include first and second pack cases 2101 and 2102 coupled to each other in directions facing each other while the plurality of battery modules 1000 are interposed therebetween. The plurality of battery modules 1000 may be electrically connected to each other using a busbar 2200, or the plurality of battery modules 1000 may be electrically connected to each other in series or in parallel or by a combination of serial and parallel connections to obtain a required electrical output.

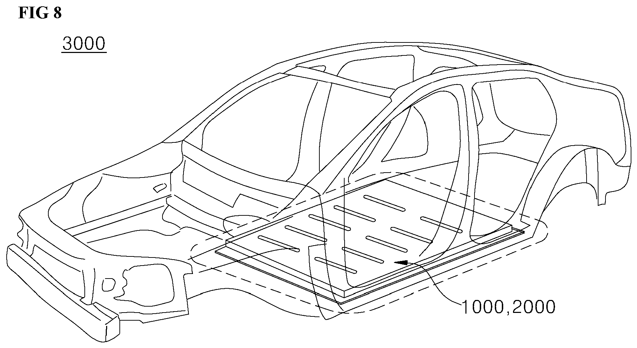

FIG. 8 is a view illustrating a vehicle body and vehicle body components, according to one example embodiment.

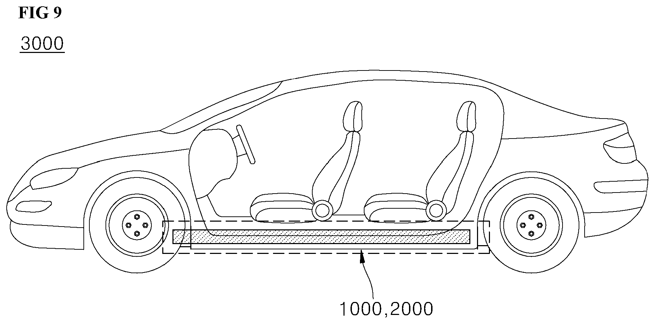

FIG. 9 is a view illustrating a vehicle body and vehicle body components, according to one example embodiment.

The battery pack 2000 according to one example embodiment described above with reference to FIGS. 6 and 7 may be mounted in a vehicle 3000. For example, the vehicle 3000 may be an electric vehicle, a hybrid vehicle, or a plug-in hybrid vehicle. The vehicle 3000 may be, e.g., a four-wheel vehicle or a two-wheel vehicle.

As illustrated in FIGS. 8 and 9, the vehicle 3000 according to one example embodiment includes the battery modules 1000 and/or the battery pack 2000 including the battery modules 1000 according to one example embodiment of the present disclosure. The vehicle 3000 operates by receiving power from the battery modules 1000 and/or the battery pack 2000 including the battery modules 1000 according to one example embodiment of the present disclosure.

Hereinafter, examples and comparative examples of the present disclosure are described. However, the following examples are merely embodiments of the present disclosure, and the present disclosure is not limited to the following examples.

### Example 1

Exemplary preparation of a composition for a first aerogel-containing layer and a composition for a third aerogel-containing layer:
A first mixed solution was prepared by adding polyvinyl alcohol (Sigma Aldrich, PVA) as a binder to ultrapure water as a solvent and sequentially mixing the first mixed solution at 30 rpm with an open blade and 700 rpm with a despa blade. A second mixed solution was prepared by adding an aerogel (BET specific surface area: 800 m²/g) to the first mixed solution and sequentially mixing the second mixed solution at 70 rpm with the open blade and 1500 rpm with the despa blade. Compositions for first and third aerogel-containing layers were prepared by adding glass wool to the second mixed solution and sequentially mixing the compositions at 30 rpm with the open blade and 1200 rpm with the despa blade. A planetary mixer (D&Tech, PT-005) was used for mixing.

The prepared composition for a first aerogel-containing layer and composition for a third aerogel-containing layer are each in the form of a slurry, and each included, based on solid content, 80 wt% aerogel, 10 wt% glass wool, and 10 wt% polyvinyl alcohol.

Exemplary preparation of a composition for a second aerogel-containing layer:
A first mixed solution was prepared by adding polyvinyl alcohol (Sigma Aldrich) as a binder to ultrapure water as a solvent and sequentially mixing the first mixed solution at 30 rpm with an open blade and 700 rpm with a despa blade. A composition for an aerogel-containing layer was prepared by adding an aerogel (BET specific surface area: 800 m²/g) to the first mixed solution and sequentially mixing the composition at 70 rpm with the open blade and 1500 rpm with the despa blade. A planetary mixer (D&Tech, PT-005) was used for mixing.

The prepared composition for an aerogel-containing layer was in the form of a slurry, and included, based on solid content, 90 wt% aerogel and 10 wt% polyvinyl alcohol, and did not include glass wool.

Exemplary manufacturing of heat insulation sheet:
The prepared composition for a first aerogel-containing layer was applied on a 0.1 mm thick mica sheet (Famica, Muscovite) as a first base layer and dried at 60 °C for 24 hours.

The prepared composition for a third aerogel-containing layer was applied on a 0.1 mm thick mica sheet (Famica, Muscovite) as a second base layer and dried at 60 °C for 24 hours.

After applying the prepared composition for a second aerogel-containing layer on the dried composition for a first aerogel-containing layer, the second base layer to which the composition for a third aerogel-containing layer was applied was stacked and rolled.

Then, a heat insulation sheet stacked in the order of the mica sheet-the first aerogel-containing layer (thickness: 0.5 mm)-the second aerogel-containing layer (thickness: 1.8 mm)-the third aerogel-containing layer (thickness: 0.5 mm)-the mica sheet was manufactured by drying the stack at 60 °C for 24 hours. In this case, a total thickness of the aerogel-containing layers was 2.8 mm, and a thickness of the heat insulation sheet was 3 mm.

### Examples 2 to 4

Heat insulation sheets were manufactured in the same manner as in Example 1, with a difference that in Example 1, the content of each component of the first aerogel-containing layer and the third aerogel-containing layer was changed as shown in Table 1 below.

### Example 5

A heat insulation sheet was manufactured in the same manner as in Example 1, with a difference that in Example 1, water-dispersible polyurethane (Sigma Aldrich, PU) instead of polyvinyl alcohol was used when preparing the composition for a first aerogel-containing layer and the composition for a third aerogel-containing layer.

### Example 6

A heat insulation sheet was manufactured in the same manner as in Example 1, with a difference that in Example 1, a mixture of polyvinyl alcohol and water-dispersible polyurethane (1:1 weight ratio) instead of polyvinyl alcohol was used when preparing the composition for a first aerogel-containing layer and the composition for a third aerogel-containing layer.

### Examples 7 and 8

Heat insulation sheets were manufactured in the same manner as in Example 1, with a difference that in Example 1, the content of each component of the first aerogel-containing layer and the third aerogel-containing layer was changed as shown in Table 1 below.

### Comparative Example 1

The prepared composition for a first aerogel-containing layer in Example 1 was applied on a mica sheet (Famica, Muscovite) with a thickness of 0.1 mm, and a mica sheet (Famica, Muscovite) with a thickness of 0.1 mm was stacked on the composition for a first aerogel-containing layer and coated using a roll rolling method. Then, a heat insulation sheet stacked in the order of the mica sheet-the first aerogel-containing layer (thickness: 2.8 mm)-the mica sheet was manufactured by drying the stack at 60 °C for 24 hours. In this case, a thickness of the aerogel-containing layer was 2.8 mm, and a thickness of the heat insulation sheet was 3 mm.

### Comparative Example 2

The prepared composition for a second aerogel-containing layer in Example 1 was applied on a mica sheet (Famica, Muscovite) with a thickness of 0.1 mm, and a mica sheet (Famica, Muscovite) with a thickness of 0.1 mm was stacked on the composition for a second aerogel-containing layer and coated using a roll rolling method. Then, a heat insulation sheet stacked in the order of the mica sheet-the second aerogel-containing layer (thickness: 2.8 mm)-the mica sheet was manufactured by drying the stack at 60 °C for 24 hours. In this case, a thickness of the aerogel-containing layer was 2.8 mm, and a thickness of the heat insulation sheet was 3 mm.

### Comparative Example 3

A composition for a first aerogel-containing layer and a composition for a second aerogel-containing layer were prepared in the same manner as in Example 1, and a heat insulation sheet stacked in the order of the mica sheet-the second aerogel-containing layer (thickness: 0.5 mm)-the first aerogel-containing layer (thickness: 1.8 mm)-the second aerogel-containing layer (thickness: 0.5 mm)-the mica sheet was manufactured. In this case, a total thickness of the aerogel-containing layers was 2.8 mm, and a thickness of the heat insulation sheet was 3 mm.

The following physical properties were evaluated for the heat insulation sheets manufactured in Examples and Comparative Examples.
(1) Heat insulation (units: °C): Each heat insulation sheet was inserted between a pair of facing 1 mm-thick aluminum plates, the heat insulation sheet was placed on the heat press, the upper plate of the heat press was heated at 350 °C, and the lower plate of the heat press was maintained at a starting temperature of 40 °C without heating. Then, a pressure of 20 kN was applied to the lower plate of the heat press, and a temperature of the lower plate of the heat press was measured after 11 minutes. As the temperature of the lower plate of the heat press decreases, it indicates that heat insulation is better.
(2) Compression rate (units: %): The degree of compression was measured at a compression speed of 0.02 m/sec by setting a zero point, inserting each heat insulation sheet between 1 mm-thick aluminum plates, and then increasing a compression force from 0 kN to 80 kN using a UTM device. The compression rate was calculated using (T1-T2)/T1x100 after measuring a thickness T1 of the heat insulation sheet upon compression at 5 kN and a thickness T2 of the heat insulation sheet upon compression at 40 kN.

**Table 1:**

| | First (third) aerogel-containing layers | | | | | Second aerogel-containing layer | | | Heat insulati on | Compres sion rate |
|---|---|---|---|---|---|---|---|---|---|---|
| | Binder | Type of binder | Aerogel | Fibrous support | Total | Binder | Aerogel | Fibrous support | | |
| Example 1 | 10 | PVA | 80 | 10 | 100 | 10 | 90 | 0 | 69 | 58 |
| Example 2 | 10 | PVA | 70 | 20 | 100 | 10 | 90 | 0 | 73 | 50 |
| Example 3 | 10 | PVA | 60 | 30 | 100 | 10 | 90 | 0 | 75 | 51 |
| Example 4 | 10 | PVA | 50 | 40 | 100 | 10 | 90 | 0 | 77 | 58 |
| Example 5 | 10 | PU | 40 | 50 | 100 | 10 | 90 | 0 | 78 | 61 |
| Example 6 | 10 | PVA + PU | 50 | 40 | 100 | 10 | 90 | 0 | 74 | 63 |
| Example 7 | 0.3 | PVA | 69.7 | 30 | 100 | 10 | 90 | 0 | 76 | 55 |
| Example 8 | 25 | PVA | 45 | 30 | 100 | 10 | 90 | 0 | 78 | 56 |
| Comparative Example 1 | 10 | PVA | 80 | 10 | 100 | - | - | - | 78 | 15 |
| Comparative Example 2 | - | - | - | - | 0 | 10 | 90 | 0 | 65 | 10 |
| Comparative Example 3 | 10 | PVA | 80 | 10 | 100 | 10 | 90 | 0 | 69 | 14 |

As shown in Table 1, the heat insulation sheets of the Examples have desired or improved heat insulation because it takes a long time to reach 300 °C, and have a high compression rate, and thus have desired or improved mechanical properties. On the other hand, because the compression rates of the heat insulation sheets of the Comparative Examples are lower than the compression rates of the Examples, the mechanical properties of the Comparative Examples are likely lower than the mechanical properties of the heat insulation sheets of the Examples.

A heat insulation sheet for a rechargeable lithium battery can absorb the pressure of an adjacent cell during a cell degradation and expansion process by providing a high compression rate, thereby increasing the stability of a battery. The heat insulation sheet for a rechargeable lithium battery according to one example embodiment can reduce or suppress heat propagation and/or heat transfer in a module by providing desired or improved heat insulation properties, thereby increasing the stability of the module.

Although example embodiments of the present disclosure have been described above, the present disclosure is not limited thereto and may be modified in any form within the scope of the claims, the detailed description of the present disclosure, and the accompanying drawings, and the modifications also fall within the scope of the present disclosure.

## Claims

1. A heat insulation sheet (200) for a rechargeable lithium battery, the heat insulation sheet (200) comprising:
a first base layer (110A),
a first aerogel-containing layer (120A),
a second aerogel-containing layer (120B), and
a third aerogel-containing layer (120C),
the first aerogel-containing layer (120A), the second aerogel-containing layer (120B) and the third aerogel-containing layer (120C) being stacked together,
wherein at least one of the first aerogel-containing layer (120A) and the third aerogel-containing layer (120C) comprises a fibrous support, an aerogel and a first binder, and
the second aerogel-containing layer (120B) comprises an aerogel and a second binder.

2. The heat insulation sheet (200) of claim 1, wherein a second base layer (110B) is further stacked on the third aerogel-containing layer (120C).

3. The heat insulation sheet (200) of claim 1 or 2, wherein a content of the fibrous support in the second aerogel-containing layer (120B) is about 0 wt%.

4. The heat insulation sheet (200) of any of claims 1 to 3, wherein the first aerogel-containing layer (120A) comprises a noncontinuous layer independent of the first base layer (110A).

5. The heat insulation sheet (200) of any of claims 2 to 4, wherein the third aerogel-containing layer (120C) comprises a noncontinuous layer independent of the second base layer (110B).

6. The heat insulation sheet (200) of any of claims 1 to 5, wherein at least one of the first binder and the second binder comprises one or more of polyvinyl alcohol, polyethylene glycol, polyacrylamide, polyvinylpyrrolidone, polyurethane, and polyester.

7. The heat insulation sheet (200) of any of claims 1 to 6, wherein at least one of the fibrous supports of the first aerogel-containing layer (120A) and the third aerogel-containing layer (120C) each comprises glass wool.

8. The heat insulation sheet (200) of any of claims 1 to 7, wherein at least one of the first aerogel-containing layer (120A) and the third aerogel-containing layer (120C) comprises the fibrous support in an amount ranging from about 5 wt% to about 80 wt%, the aerogel in an amount ranging from about 10 wt% to about 90 wt%, and the first binder in an amount ranging from about 0.3 wt% to about 25 wt%.

9. The heat insulation sheet (200) of any of claims 1 to 8, wherein the second aerogel-containing layer (120B) comprises the aerogel in an amount ranging from about 50 wt% to about 99 wt%, and the second binder in an amount ranging from about 1 wt% to about 50 wt%.

10. The heat insulation sheet (200) of any of claims 1 to 9, wherein the first base layer (110A) comprises a mica sheet.

11. The heat insulation sheet (200) of any of claims 2 to 10, wherein the second base layer (110B) comprises a mica sheet.

12. A rechargeable lithium battery module (1000) comprising:
a plurality of battery cells (100) that face each other; and
the heat insulation sheet (200) of any of claims 1 to 11 between the plurality of battery cells (100).
